# EUROPÄISCHE PATENTSCHRIFT

(11) **EP 1 238 850 B1**
(45) Veröffentlichungstag und Bekanntmachung des Hinweises auf die Patenterteilung: **23.08.2006**
(21) Anmeldenummer: 02001841.2
(22) Anmeldetag: 26.01.2002
(51) Int. Cl.: B60N 2/00, B60N 2/22

(54) **Fahrgastsitz mit Sitzbelegungserkennungssensor**
Passenger seat with occupant detection sensor
Siège de passager avec capteur d'occupation de siège

(30) Priorität: 09.03.2001 DE 10111385
(43) Veröffentlichungstag der Anmeldung: 11.09.2002
(73) Patentinhaber: Vogel Industrie GmbH, 76228 Karlsruhe (DE)
(72) Erfinder: Bilfinger, Jan, 76228 Karlsruhe (DE)
(74) Vertreter: Dimmerling, Heinz

(56) Entgegenhaltungen:
- EP-A- 0 990 565
- DE-A- 19 842 946
- DE-C- 19 852 541
- PATENT ABSTRACTS OF JAPAN vol. 1998, no. 13, 30. November 1998 (1998-11-30) -& JP 10 211837 A (DENSO CORP), 11. August 1998 (1998-08-11)

## Beschreibung

Die Erfindung betrifft einen Fahrgastsitz für Personenbeförderungsfahrzeuge, insbesondere Busse und Bahnen, nach dem Oberbegriff des Anspruchs 1, mit einem Sitzteil und einer verschwenkbaren Rückenlehne, welche eine Ausgangsstellung hat und in wenigstens einer Betriebsstellung arretierbar ist

Ein derartiger Fahrgastsitz ist im Stand der Technik hinlänglich bekannt (siehe z.B. JP-A-10 211 837). Er ist als Teil einer Standardausrüstung nahezu in allen Bussen, Bahnen und Flugzeugen vorhanden.

Durch die Verschwenkbarkeit der Rückenlehne hat ein Fahrgast die Möglichkeit, die Rückenlehne von einer senkrechten Ausgangsstellung in eine schrägere Lage, eine sogenannte Ruhestellung zu bringen, wodurch er entspannter auf dem Sitz sitzen kann. Die Erfahrung hat gezeigt, daß der überwiegende Teil der Fahrgäste von dieser Möglichkeit Gebrauch macht.

Da die Rückenlehne, wenn sie schräger gestellt ist, in den Raum hinter dem Sitz hineinragt, wodurch sie die Benutzung des betreffenden hinter ihr angeordneten Sitzes insbesondere beim Hinsetzen oder Aufstehen beeinträchtigt, sind die Fahrgäste gehalten, die Rückenlehne beim Verlassen des Sitzes wieder senkrecht zu stellen. Dies wird jedoch häufig vergessen, so daß die Benutzung des hinter ihr angeordneten Sitzes in unnötiger Weise erschwert wird.

Des weiteren werden die Rückenlehnen bei der Reinigung beispielsweise eines Busses vom Reinigungspersonal regelmäßig wieder in ihre senkrechte Lage gebracht. Hierzu muß eine Reinigungskraft durch den Bus gehen und alle sich nicht in ihrer senkrechten Lage befindliche Rückenlehne in die senkrechte Lage bringen. Dies ist recht aufwendig.

Aus der o.g. JP-A-10 211837 ist ein KFZ-Fahrzeugsitz bekannt, welcher eine verschwenkbare Rückenlehne hat, welche in Abhängigkeit eines Sensors, mittels welchem die Außentemperatur erfassbar ist, sowie auf Grund einer mittels des Zündschlüssels und des Türschalters des betreffenden KFZ getroffenen Entscheidung, ob der Sitz belegt ist, zur Abdeckung des Sitzteils gegen Sonneneinstrahlung über das Sitzteil geschwenkt wird.

Aus der DE 198 42 946 A1 ist ein System zur Erkennung der Belegung eines Sitzplatzes bekannt, bei welchem mittels eines Sensors feststellbar ist, ob ein Sitzplatz belegt ist oder nicht. In Abhängigkeit des Ausgangssignals des Sensors soll beispielsweise der Betriebszustand eines Computerterminals beeinflusst werden.

Des Weiteren ist aus der EP 0 990 565 A1 ein Fahrgastsitz bekannt, welcher einen Sensor aufweist, zur Erfassung des Gewichts einer den Fahrgastsitz benutzenden Person. In Abhängigkeit des Gewichts der Person wird die Gasmenge eingestellt, mit der ein die Person im Falle eines Unfalls schützender Airbag aufgeblasen wird.

Darüber hinaus ist aus der DE 198 52 541 C1 eine Einrichtung und ein Verfahren zur Erkennung der Belegung eines Kraftfahrzeugsitzes bekannt, bei welcher beziehungsweise bei welchem der Einfluss des Gewichts einer den Kraftfahrzeugsitz benutzenden Person auf eine Verstelleinrichtung wie beispielsweise einer Sitzhöhenverstellung, einer Sitzneigungsverstellung oder einer Sitzkissentiefenverstellung zur Feststellung, ob der Kraftfahrzeugsitz belegt ist oder nicht, verwendet wird. So soll beispielsweise mittels der Stromaufnahme eines elektrischen Antriebs einer Verstelleinrichtung bestimmt werden, ob der Kraftfahrzeugsitz von einer Person benutzt wird oder nicht.

Es ist Aufgabe der Erfindung, einen eingangs genannten Fahrgastsitz derart auszubilden, daß die Rückenlehne bei nicht belegtem Sitzteil selbsttätig ihre Ausgangsstellung einnimmt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung 1 ist ein Fahrgastsitz für Personenbeförderungsfahrzeuge, insbesondere Busse und Bahnen, mit einem Sitzteil und einer verschwenkbaren Rückenlehne, welche eine Ausgangsstellung hat und in wenigstens einer Betriebsstellung arretierbar ist, dadurch gekennzeichnet, daß ein Sensor vorhanden ist, mittels welchem feststellbar ist, ob das Sitzteil belegt ist, sowie ein Element vorhanden ist, mittels dem die Rückenlehne in eine vorbestimmte Position bringbar ist.

Dadurch, daß ein Sensor vorhanden ist, mittels welchem feststellbar ist, ob das Sitzteil belegt ist, läßt sich auf einfache Weise feststellen, wann ein Fahrgast den Sitz verlassen hat. Dadurch ist die Möglichkeit geschaffen, die Rückenlehne nach dem Aufstehen des Fahrgastes in eine vorbestimmte Position zu bringen. Dies geschieht in vorteilhafter Weise durch das Element, mittels dem die Rückenlehne in eine vorbestimmte Position bringbar ist. Das Element läßt sich durch den Sensor ansteuern, so daß die Rückenlehne nach dem Aufstehen des Fahrgastes selbsttätig in eine vorbestimmte Position gelangen kann.

Sehr vorteilhaft ist es, wenn die Verstellung der Rückenlehne nach dem Auslösen durch den Sensor zeitverzögert erfolgt beziehungsweise der Sensor sein Signal zeitverzögert abgibt. Hierdurch verändert die Rückenlehne bei einer kurzzeitigen Entlastung des Sitzteiles seine Lage nicht.

Das Element ist in vorteilhafter Weise als Gasdruckfeder ausgebildet. Hierdurch ist es möglich, auf ein Standardbauelement zurückzugreifen, was sich günstig auf die Kosten auswirkt. Darüber hinaus ist eine Gasdruckfeder regelmäßig bei herkömmlichen Sitzen bereits vorhanden, so daß kein zusätzliches Element verwendet werden muß. Eine Gasdruckfeder hat darüber hinaus den Vorteil, daß sich bei ihr eine Verzögerung ihrer Wirkung leicht verwirklichen läßt. Das Element kann aber auch ein anderer Antrieb wie beispielsweise ein Elektromotor, ein mechanisches Element mit einer Feder oder einem Gegengewicht sein.

Besonders günstig ist es, wenn die vorbestimmte Position die Ausgangsstellung ist. Hierdurch gelangt die Rückenlehne selbsttätig nach dem Verlassen des Fahrgastsitzes in ihre Ausgangsstellung.

Bei einer weiteren besonderen Ausführungsform der Erfindung ist ein über ein Betätigungselement betätigbarer Auslöser vorhanden, mittels dem die Arretierung der Rückenlehne aufhebbar ist. Hierdurch läßt sich die Rückenlehne auf einfache Weise verstellen.

Sehr vorteilhaft ist auch, wenn der Sensor als Drucktaste ausgebildet ist, wie dies bei einer weiteren besonderen Ausführungsform der Erfindung vorgesehen ist. Hierdurch kann ebenfalls auf ein Standardbauelement zurückgegriffen werden, wodurch sich der Sensor sehr preiswert realisieren läßt. Ein derartiger Sensor kann beispielsweise in einer Aussparung eines aus Schaumstoff bestehenden Sitzteils angeordnet werden, wobei die Oberfläche des Drucktasters beispielsweise durch eine Platte vergrößert werden kann. Hierdurch wird auf einfache Weise vermieden, daß ein auf dem Sitzteil sitzender Fahrgast den Sensor spürt.

Besonders vorteilhaft ist es, wenn das Betätigungselement und der Sensor identisch ausgebildet sind. Dies wirkt sich sehr günstig auf die Herstellung sowie Lagerhaltungskosten aus.

Bei einer weiteren besonderen Ausführungsform der Erfindung ist der Sensor und das Betätigungselement mittels eines Seilzugs mit dem Auslöser verbunden, wobei wenigstens das Betätigungselement über einen ersten Hebel mit dem Auslöser ver-bunden ist. Durch die Umlenkung der Betätigungsrichtung des Seilzugs über den ersten Hebel wird in vorteilhafter Weise erreicht, daß die Betätigungsrichtung des Betätigungselements entgegengesetzt zur Betätigungsrichtung des Sensors wirkt. Dies ermöglicht, daß das Betätigungselement und der Sensor parallel auf den Auslöser wirken können. Denn hierdurch kann der Sensor den Auslöser betätigen, wenn das Sitzteil entlastet ist, das heißt kein Druck auf den betreffenden Drucktaster ausgeübt wird, wohingegen der Auslöser mittels des Betätigungselements dann betätigt werden kann, wenn Druck auf den betreffenden Drucktaster ausgeübt wird.

Sehr vorteilhaft ist auch eine Ausführungsform der Erfindung, bei der der Auslöser über einen zweiten Hebel mit dem Sensor und dem ersten Hebel verbunden ist. Durch die durch den zweiten Hebel erzeugte Wirkrichtungsumkehr wird in vorteilhafter Weise erreicht, daß die Seilzüge stets unter Zugspannung stehen. Denn der Auslöser einer herkömmlichen Gasfeder muß durch Druck gegen eine Federkraft betätigt werden. Da diese Federkraft durch den zweiten Hebel in eine Zugkraft auf die Seilzüge umgelenkt wird, bleiben die Seilzüge stets gespannt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

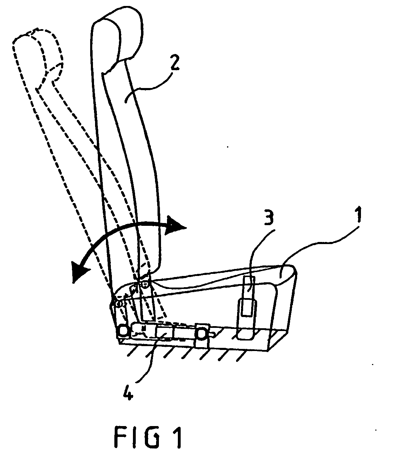

Es zeigt
- Figur 1: eine schematische Anordnung eines erfindungsgemäß ausgebildeten Fahrgastsitzes in perspektivischer Darstellung,
- Figur 2: eine schematische Anordnung eines erfindungsgemäß ausgebildeten Fahrgastsitzes in Explosionsdarstellung bei nicht belegtem Sitzteil und nicht betätigtem Betätigungselement,
- Figur 3: die in Figur 2 dargestellte schematische Anordnung bei belegtem Sitzteil und nicht betätigtem Betätigungselement und
- Figur 4: die in Figur 2 dargestellte schematische Anordnung bei belegtem Sitzteil und betätigtem Betätigungselement.

Wie den Figuren entnommen werden kann, weist ein erfindungsgemäßer Fahrgastsitz ein Sitzteil 1 auf, an dem eine verschwenkbare Rückenlehne 2 angeordnet ist. Die Rückenlehne 2 ist um eine Schwenkachse 2a schwenkbar. An dem sogenannten Unterflurhebel der Rückenlehne 2 ist eine Gasfeder 4 angeordnet. Die Gasfeder 4 wird über einen Auslöser 6 arretiert beziehungsweise freigegeben. Der Auslöser 6 wird gegen eine Federkraft betätigt. Das dem Unterflurhebel abgewandte Ende der Gasdruckfeder 4 ist mit dem Sitzteil 1 beziehungsweise einem nicht gezeigten Gestell verbunden.

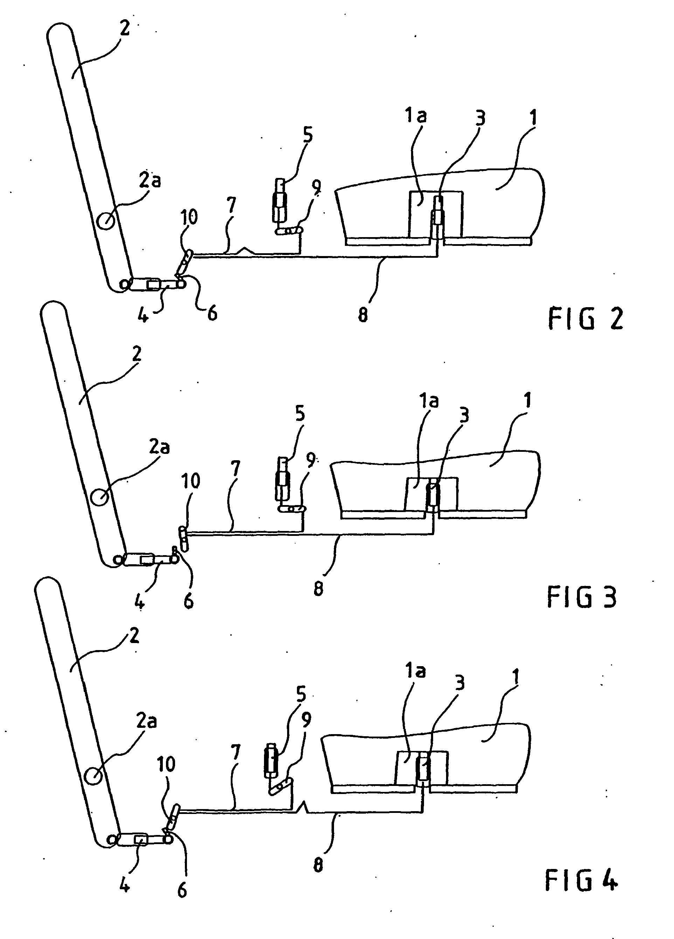

Das Sitzteil 1 weist eine Ausnehmung 1a auf, in dem ein Sensor 3 angeordnet ist. Der Sensor 3 ist als Drucktaster ausgebildet. Der Drucktaster 3 ist so in der Ausnehmung 1a angeordnet, daß er bei nicht belegtem Sitzteil 1 nicht betätigt ist. Dies ist in Figur 2 dargestellt.

Weiterhin ist ein Betätigungselement 5 vorgesehen, welches regelmäßig in einer Armlehne des Fahrgastsitzes angeordnet ist. Das Betätigungselement 5 ist ebenfalls als Drucktaster ausgebildet. Das Betätigungselement 5 und der Sensor 3 sind identisch ausgebildet.

Das als Drucktaster ausgebildete Betätigungselement 5 ist über einen ersten Hebel 9 mit einem ersten Seilzug 7 verbunden. Der erste Seilzug 7 ist an seinem dem ersten Hebel 9 abgewandten Ende mit einem zweiten Hebel 10 verbunden. Mit dem zweiten Hebel 10 ist über einen zweiten Seilzug 8 auch der ebenfalls als Drucktaster ausgebildete Sensor 3 verbunden. Die den Seilzügen 7, 8 abgewandte Seite des zweiten Hebels 10 wirkt bei Zug durch wenigstens einen der Seilzüge 7, 8 auf den zweiten Hebel 10 auf den Auslöser 6 der Gasdruckfeder 4.

Wie Figur 2 entnommen werden kann, zieht der als Drucktaster ausgebildete Sensor 3 den zweiten Hebel 10 mittels des zweiten Seilzugs 8 so weit, daß der Auslöser 6 betätigt ist. Hierbei weist der erste Seilzug 7 eine Überlänge auf. Dies ist durch eine kleine dreieckförmige Ausbuchtung in der Figur 2 dargestellt. In dieser Stellung bleibt eine Betätigung des Betätigungselements 5 ohne Auswirkungen. Durch die Betätigung des Auslösers 6 ist die Gasdruckfeder 4 ausgelöst

Wie Figur 3 entnommen werden kann, schwenkt der zweite Hebel 10 aufgrund der vom Auslöser 6 ausgehenden Rückstellkraft in eine andere Position, wenn das Sitzelement 1 belegt ist, wodurch der als Druckschalter ausgebildete Sensor 3 betätigt ist. Durch die Betätigung des Sensors 3 wird die Betätigung des Auslösers 6 aufgehoben. In dieser Position ist der erste Seilzug 7 ebenso wie der zweite Seilzug 8 unter einer geringen Spannung.

Wird bei belegtem Sitzteil 1 der Auslöser 5 betätigt, wie dies in Figur 4 dargestellt ist, wird mittels des ersten Seilzugs 7 auf den zweiten Hebel 10 Zug ausgeübt, wodurch er den Auslöser 6 wieder in die Position schwenkt, in der der Auslöser 6 die Gasdruckfeder 4 freigibt. Die Rückenlehne ist somit nicht arretiert und kann um ihren Schwenkpunkt 2a verschwenkt werden. Der zweite Seilzug 8 weist in dieser Position eine Überlänge auf, welche durch eine kleine dreieckige Ausbuchtung in der Figur 4 angedeutet ist.

## Patentansprüche

1. Fahrgastsitz für Personenbeförderungsfahrzeuge, insbesondere Busse und Bahnen, mit einem Sitzteil (1) und einer verschwenkbaren Rückenlehne (2), welche eine Ausgangsstellung hat und in wenigstens einer Betriebsstellung arretierbar ist,
**dadurch gekennzeichnet,**
**daß** ein Sensor (3) vorhanden ist, mittels welchem feststellbar ist, ob das Sitzteil (1) belegt ist, sowie ein vom Sensor (3) angesteuertes Element (4) vorhanden ist, mittels dem die Rückenlehne (2) bei nicht belegtem Sitzteil (1) von der wenigstens einen Betriebsstellung selbsttätig in ihre Ausgangsstellung bringbar ist.

2. Fahrgastsitz nach Anspruch 1,
**dadurch gekennzeichnet,**
**daß** die Tätigkeit des Elements (4) auf das Sensorsignal zeitverzögert erfolgt.

3. Fahrgastsitz nach Anspruch 1 oder 2,
**dadurch gekennzeichnet,**
**daß** das Element (4) eine Gasdruckfeder ist.

4. Fahrgastsitz nach einem der Ansprüche 1 bis 3,
**dadurch gekennzeichnet,**
**daß** ein über ein Betätigungselement (5) betätigbarer Auslöser (6) vorhanden ist, mittels dem die Arretierung der Rückenlehne (2) aufhebbar ist.

5. Fahrgastsitz nach einem der Ansprüche 1 bis 4,
**dadurch gekennzeichnet,**
**daß** der Sensor (3) als Drucktaster ausgebildet ist.

6. Fahrgastsitz nach Anspruch 4 oder 5,
**dadurch gekennzeichnet,**
**daß** das Betätigungselement (5) und der Sensor (3) identisch ausgebildet sind.

7. Fahrgastsitz nach Anspruch 5 oder 6,
**dadurch gekennzeichnet,**
**daß** der Sensor (3) und das Betätigungselement (5) mittels eines Seilzuges (7, 8) mit dem Auslöser (6) verbunden sind, wobei wenigstens das Betätigungselement (5) über einen ersten Hebel (9) mit dem Auslöser (6) verbunden ist.

8. Fahrgastsitz nach Anspruch 7,
**dadurch gekennzeichnet,**
**daß** der Auslöser (6) über einen zweiten Hebel (10) mit dem Sensor (3) und dem ersten Hebel (9) verbunden ist.

## Claims

1. Passenger seat for passenger vehicles, in particular buses and trains, having a seat part (1) and a pivotable backrest (2), which has a starting position and can be locked in at least one operating position, **characterised in that** a sensor (3) is present, by means of which it can be determined whether the seat part (1) is occupied, and an element (4) controlled by the sensor (3) is present, by means of which the backrest (2), in the case of a non-occupied seat part (1), can be brought to its starting position automatically from the at least one operating position.

2. Passenger seat according to Claim 1, **characterised in that** the element (4) is activated with a time delay in response to the sensor signal.

3. Passenger seat according to Claim 1 or 2, **characterised in that** the element (4) is a gas pressure spring.

4. Passenger seat according to one of Claims 1 to 3, **characterised in that** a release (6) activated by an actuating element (5) is present, by means of which the locking of the backrest (2) can be removed.

5. Passenger seat according to one of Claims 1 to 4, **characterised in that** the sensor (3) is constructed as a pressure switch.

6. Passenger seat according to Claim 4 or 5, **characterised in that** the actuating element (5) and the sensor (3) are identically constructed.

7. Passenger seat according to Claim 5 or 6, **characterised in that** the sensor (3) and the actuating element (5) are connected with the release (6) by a cable pull (7, 8), whereby at least the actuating element (5) is connected with the release (6) by a first lever (9).

8. Passenger seat according to Claim 7, **characterised in that** the release (6) is connected with the sensor (3) and the first lever (9) by a second lever (10).

## Revendications

1. Siège de passager pour véhicules de transport de personnes, notamment des bus et des trains, comprenant une partie d'assise (1) et un dossier pivotant (2) qui présente une position de départ, et peut être arrêté dans au moins une position de fonctionnement,
**caractérisé par**
la présence d'un capteur (3) au moyen duquel il est possible de constater si la partie d'assise (1) est occupée, ainsi que d'un élément (4) activé par ledit capteur (3), et au moyen duquel le dossier (2) peut être amené à sa position de départ lorsque ladite partie d'assise (1) n'est pas occupée.

2. Siège de passager selon la revendication 1,
**caractérisé par le fait**
**que** l'activité de l'élément (4) est temporisée en fonction du signal du capteur.

3. Siège de passager selon la revendication 1 ou 2,
**caractérisé par le fait**
**que** l'élément (4) est un ressort de pression à gaz.

4. Siège de passager selon l'une des revendications 1 à 3,
**caractérisé par**
la présence d'un déclencheur (6) pouvant être manoeuvré par l'intermédiaire d'un élément d'actionnement (5), et par l'intermédiaire duquel l'arrêt du dossier (2) peut être neutralisé.

5. Siège de passager selon l'une des revendications 1 à 4,
**caractérisé par le fait**
**que** le capteur (3) est réalisé sous la forme d'un bouton-poussoir.

6. Siège de passager selon la revendication 4 ou 5,
**caractérisé par le fait**
**que** l'élément d'actionnement (5) et le capteur (3) sont de réalisations identiques.

7. Siège de passager selon la revendication 5 ou 6,
**caractérisé par le fait**
**que** le capteur (3) et l'élément d'actionnement (5) sont reliés au déclencheur (6) au moyen d'un câble de traction (7, 8), au moins l'élément d'actionnement (5) étant relié au déclencheur (6) par l'intermédiaire d'un premier levier (9).

8. Siège de passager selon la revendication 7,
**caractérisé par le fait**
**que** le déclencheur (6) est relié au capteur (3) et au premier levier (9) par l'intermédiaire d'un second levier (10).
